# EUROPEAN PATENT APPLICATION

(11) **EP 4 648 192 A1**
(43) Date of publication of application: **12.11.2025**
(21) Application number: 24767301.5
(22) Date of filing: 08.02.2024
(51) Int. Cl.: H01M 50/242, H01M 10/04, H01M 50/204

(54) **BATTERY MODULE AND METHOD FOR CONTROLLING BATTERY MODULE**

(30) Priority: 08.03.2023 KR 20230030734; 31.01.2024 KR 20240015062
(71) Applicant: LG Energy Solution, Ltd., Seoul 07335 (KR)
(72) Inventor: HAN, Gi Beom, Daejeon 34122 (KR); PARK, Kang Joon, Daejeon 34122 (KR); LEE, You Shin, Daejeon 34122 (KR); LEE, Jae Young, Daejeon 34122 (KR); PARK, Sin Young, Daejeon 34122 (KR); PARK, Byung Chun, Daejeon 34122 (KR)
(74) Representative: Hoffmann Eitle
(86) International application number: PCT/KR2024/001927
(87) International publication number: WO 2024/186012

(57) **Abstract**

The battery module according to an embodiment of the present invention may comprise: a housing; a plurality of secondary batteries contained in the housing; a fluid provided so that the plurality of secondary batteries are immersed in the housing; and a pressurizing unit provided to pressurize the fluid.

## Description

### TECHNICAL FIELD

### CROSS-REFERENCE TO RELATED APPLICATIONS

The present application claims priority to Korean Patent Application No. 10-2023-0030734 filed on March 8, 2023 and Korean Patent Application No. 10-2024-0015062 filed on January 31, 2024 in the Republic of Korea, the disclosures of which are incorporated herein by reference.

### TECHNICAL FIELD

The present disclosure relates to a battery module and a method for controlling the battery module.

### BACKGROUND ART

To solve the environmental pollution problem and the energy source problem caused by shortage of oil resources, research and development efforts are being made into the production of electrical power based on eco-friendly energy sources. In particular, secondary batteries have been widely studied, and research is being conducted in various aspects such as materials, structures, processes and stability of secondary batteries.

A plurality of secondary batteries may be installed and managed for each module or pack, and goes through repeated charge and discharge. To improve energy density, voltage applied to secondary batteries is increasing, and development proceeds towards reduced gas generation through electrolyte solution additives or surface modification of positive electrode materials. Additionally, it is necessary to structurally suppress gas generation in order to mitigate swelling of secondary batteries and contribute to stability of modules or packs.

According to the conventional art, when gas-induced swelling occurs in a plurality of secondary batteries, it was difficult to structurally control, and as a result, there was a stability risk.

### SUMMARY

### TECHNICAL PROBLEM

To solve the above-described problem, the present disclosure is directed to providing a battery module for improving structural stability by suppressing swelling and a method for controlling the battery module.

### TECHNICAL SOLUTION

A battery module according to an embodiment of the present disclosure includes a housing, a plurality of secondary batteries housed in the housing, a fluid contained in the housing so that the plurality of secondary batteries is submerged in the fluid, and a pressurizer configured to apply pressure to the fluid.

The pressurizer may be installed on the housing moveably relative to the fluid.

The fluid may include an incompressible fluid.

The battery module may further include a pressure sensor to detect a pressure change of the fluid.

The pressure sensor may be installed on the housing with an end coming into contact with the fluid to detect.

The pressurizer may be configured to apply the pressure to the fluid based on a result of the detection of the pressure sensor.

The pressurizer may be configured to apply, to the fluid, an amount of the pressure that is equal to or larger than an increase in the pressure of the fluid detected by the pressure sensor.

The fluid may be a flame retardant fluid.

Additionally, the fluid may be a silicone oil.

The battery module may further include a fluid inlet on a side of the housing, and a fluid outlet on an opposite side of the housing.

A method for controlling a battery module according to an embodiment of the present disclosure includes detecting a pressure of a fluid filled in the housing so that a plurality of secondary batteries housed in the housing is submerged in the fluid using a pressure sensor, and applying pressure to the fluid using a pressurizer based on a result of the detection of the pressure sensor.

The applying of the pressure may include detecting, by the pressure sensor, an increase in the pressure of the fluid.

The applying of the pressure may include acquiring, by a controller, a value of the pressure detected using the pressure sensor, and controlling the pressurizer to apply, to the fluid, to an amount of the pressure that is equal to or larger than the increase in the pressure of the fluid based on the value of the pressure acquired by the controller.

### ADVANTAGEOUS EFFECTS

According to an exemplary embodiment of the present disclosure, it may be possible to effectively suppress swelling.

According to an exemplary embodiment of the present disclosure, it may be possible to improve structural stability.

### BRIEF DESCRIPTION OF THE DRAWINGS

FIG. 1 is a vertical cross-sectional view showing a structure of a battery module according to an embodiment of the present disclosure.
FIG. 2 is a flowchart showing control of a battery module according to an embodiment of the present disclosure.
FIG. 3 is a vertical cross-sectional view showing increased volume of some of a plurality of secondary batteries according to an embodiment of the present disclosure.
FIG. 4 is a vertical cross-sectional view showing application of pressure to a fluid using a pressurizer according to an embodiment of the present disclosure.
FIG. 5 is a vertical cross-sectional view showing a structure of a battery module according to another embodiment of the present disclosure.

### DETAILED DESCRIPTION

Hereinafter, exemplary embodiments of the present disclosure will be described in sufficient detail with reference to the accompanying drawings to enable those having ordinary skill in the technical field which the present disclosure pertaining to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, identical or similar reference numerals are affixed to identical or similar elements throughout the present disclosure.

It should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

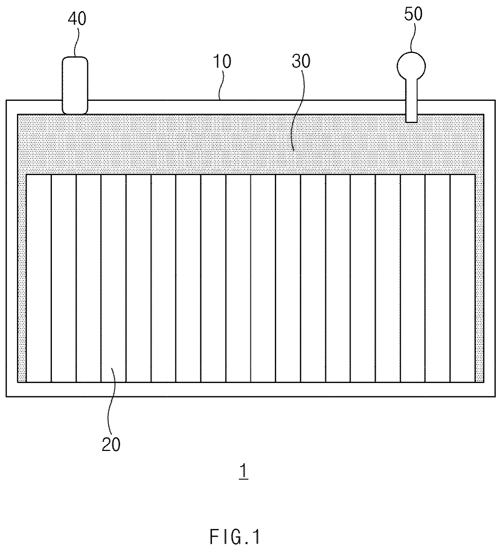

FIG. 1 shows a structure of a battery module according to an embodiment of the present disclosure.

The battery module 1 may include a housing 10. The housing 10 may form the exterior of the battery module 1. The housing 10 may have an accommodation space in which a plurality of secondary batteries 20 is received.

The battery module 1 may include the plurality of secondary batteries 20. The plurality of secondary batteries 20 may be housed in the housing 10.

The battery module 1 may include a fluid 30. For example, the fluid may be contained in the housing 10 of the battery module 1. The fluid 30 may be contained in the housing 10 so that the plurality of secondary batteries 20 is submerged in the fluid 30.

The fluid 30 may include different types of fluids. The fluid 30 inside the housing 10 may be a liquid or a gas.

The fluid 30 may include an incompressible fluid. When the fluid 30 is an incompressible fluid, pressure (e.g., applied pressure) may be transmitted more effectively.

The fluid 30 may be a flame retardant fluid. When the fluid 30 is a flame retardant fluid, it may be possible to reduce a fire risk, thereby improving chemical stability.

The flame retardant fluid may include different types of fluids of non-flammable materials. For example, the flame retardant fluid may include an ionic liquid. Since an ionic bond is formed between cation and anion, the ionic liquid tends to be nonvolatile at high temperature and has high heat resistance. The ionic liquid may comprise an organic cation and an inorganic or organic anion.

The organic cation may have various structures. For example, the organic cation may have a structure of pyridinium, imidazolium, pyrrolidinium, ammonium, phosphonium or sulphonium containing N, P, S as the primary element.

Additionally, the anion of the ionic liquid may include different types of anions. For example, the anion may include a fluorine-based anion such as hexafluorophosphate (PF₆⁻), triflate (CF₃SO₃⁻), tetrafluoroborate (BF₄⁻) and the like.

Additionally, the flame retardant fluid may include a silicone oil. The silicone oil has oxidation stability, thereby preventing surface oxidation of the plurality of secondary batteries 20, and has high heat resistance, so this has a beneficial effect on the prevention of ignition in a high temperature condition.

On the other hand, the fluid 30 may include a FreonTM refrigerant having high thermal stability or a hydrocarbon refrigerant that is nontoxic and stable.

The battery module 1 may include a pressurizer 40. The pressurizer 40 may be configured to apply pressure to the fluid 30. The pressurizer 40 may be moveable relative to the fluid 30. For example, the pressurizer 40 may be installed on the housing 10 to apply pressure to the fluid 30.

The pressurizer 40 may be installed on the housing 10 and configured to apply pressure to the fluid 30 or release the pressure by moving relative to the fluid 30.

For example, the pressurizer 40 may be installed on the top side of the housing 10 and configured to apply pressure to the fluid 30 or release the pressure by moving in the upward and downward directions. Specifically, when the pressurizer 40 moves downwards, the accommodation space in the housing 10 accommodating the fluid 30 reduces, and pressure may be applied to the fluid 30. Additionally, when the pressurizer 40 moves upwards, the accommodation space in the housing 10 accommodating the fluid 30 becomes wider again, and the pressure applied to the fluid 30 may be released.

The pressurizer 40 may apply pressure to the fluid 30 by moving in the inward direction of the battery module 10 (or the housing 10). Additionally, the pressurizer 40 may release or reduce the pressure applied to the fluid 30 by moving in the outward direction of the battery module 10 (or the housing 10).

The pressure applied to the fluid 30 may change depending on how much the pressurizer 40 is inserted into the battery module 10 (or the housing 10). For example, the greater extent to which the pressurizer 40 is inserted into the battery module 10 (or the housing 10), the higher pressure applied.

The pressurizer 40 is not limited to a particular mechanism of relative movement or type so long as it has a structure for pushing a predetermined volume into the battery module 10. For example, the pressurizer 40 may include a piston to move relative to the fluid 30, but is not limited thereto.

The pressurizer 40 may have various shapes. For example, the pressurizer 40 may have a cylindrical rod shape. When the pressurizer 40 has a cylindrical rod shape, parts of the pressurizer 40 that contacts the housing 10 may be curved in order to minimize damage to the housing 10 during the movement of the pressurizer 40 in the upward and downward directions.

The battery module 1 may include a pressure sensor 50. The pressure sensor 50 may be configured to detect the pressure (e.g., a pressure value, a pressure change) of the fluid 30. For example, an end of the pressure sensor 50 may come into contact with the fluid 30 to detect the pressure. Additionally, the pressure sensor 50 may be installed on the housing 10.

The pressurizer 40 may be configured to apply pressure to the fluid 30 based on the detection result of the pressure sensor 50. For example, the battery module 1 may be electrically connected to an external controller (not shown), and each of the pressurizer 40 and the pressure sensor 50 may be also electrically connected to the controller. The controller may determine how much pressure should be applied based on the pressure value acquired from the pressure sensor 50, and transmit the determined amount of pressure to the pressurizer 40. The pressurizer 40 may apply the determined amount of pressure to the fluid 30.

The pressure sensor 50 may include different types of pressure sensors. For example, the pressure sensor 50 may include an electronic sensor that obtains a switching output by converting the detected pressure to an electrical signal. Additionally, the pressure sensor 50 may include a mechanical sensor that obtains a switching output by converting the pressure to displacement.

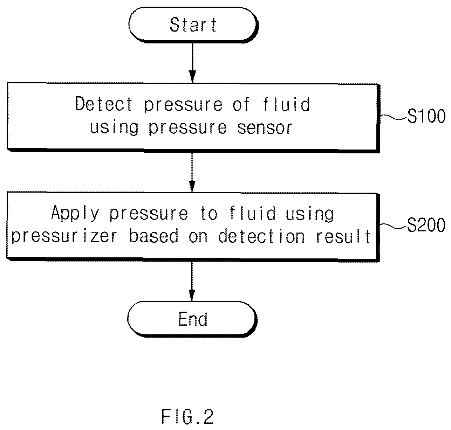

FIG. 2 is a flowchart showing control of the battery module according to an embodiment of the present disclosure.

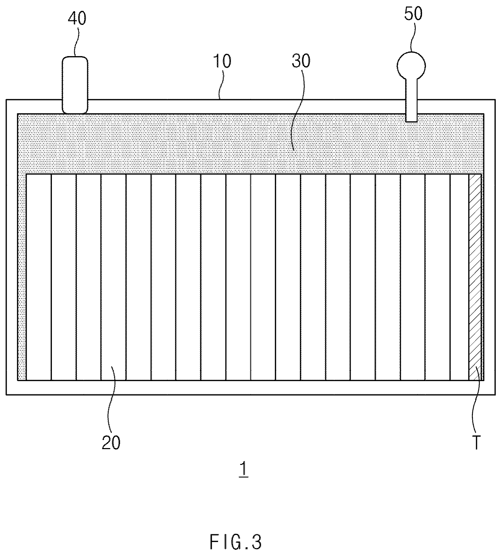

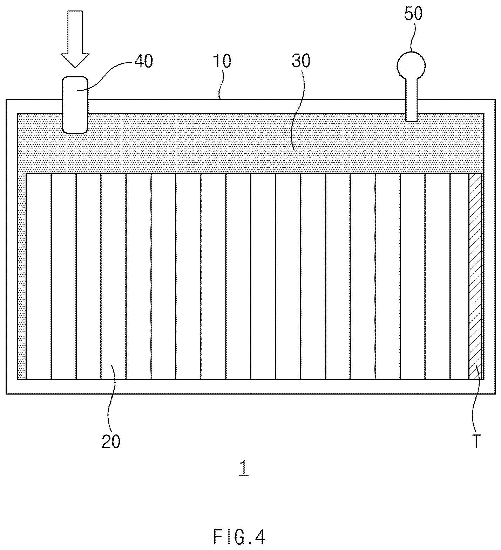

The control flow according to FIG. 2 will be described with reference to FIG. 3 showing the increased volume of some of the plurality of secondary batteries according to an embodiment of the present disclosure and FIG. 4 showing the application of pressure to the fluid using the pressurizer according to an embodiment of the present disclosure.

The description of the previous embodiment may be equally or similarly applied to this embodiment.

According to S100, a method for controlling the battery module 1 may include detecting the pressure of the fluid 30 filled in the housing 10 so that the plurality of secondary batteries 20 housed in the housing 10 is submerged in the fluid 30 using the pressure sensor 50.

Referring to FIG. 3, a volume increase region T may be created in some of the plurality of secondary batteries 20. The volume increase region T may be formed by gas generated from some of the plurality of secondary batteries 20 during charging and discharging.

When the volume increase region T is formed, an amount of pressure corresponding to the increase in volume of the volume increase region T may be transmitted to the fluid 30. When the fluid 30 is an incompressible liquid, the pressure transmission may be more effective.

The pressure sensor 50 may detect the increased pressure of the fluid 30 due to the volume increase region T. The pressure sensor 50 may detect the pressure of the fluid 30 (e.g., the increase/decrease in pressure) in real time.

According to the above description, although the embodiment in which the volume increase region T is formed has been described, definition of the specific region is not necessary. The above description may be universally applied to regions or portions to which the pressure of the fluid 30 is transmitted due to gas-induced swelling.

According to S200, the method for controlling the battery module 1 may include applying pressure to the fluid 30 using the pressurizer 40 based on the detection result of the pressure sensor 50.

The step of applying the pressure may include detecting, by the pressure sensor 50, the increase in pressure of the fluid 30. In other words, the detection result of the pressure sensor 50 may include the detected increase in pressure of the fluid 30.

The step of applying the pressure may include acquiring, by the controller, the pressure value detected using the pressure sensor 50.

The step of applying the pressure may include controlling the pressurizer 40 to apply, to the fluid 30, the pressure (or the amount of pressure to apply) that is equal to or larger than the increase in pressure of the fluid 30 based on the pressure value acquired by the controller.

Referring to FIG. 4, the pressurizer 40 may apply, to the fluid 30, the amount of pressure that is equal to or larger than the increase in pressure of the fluid 30 detected by the pressure sensor 50 by the control of the controller.

The pressurizer 40 may apply the pressure to the fluid 30 or release the pressure by moving relative to the fluid 30. For example, as shown in FIG. 4, the pressurizer 40 may apply the pressure to the fluid 30 by moving in the upward and downward directions. However, the movement direction of the pressurizer 40 is not limited to a particular direction so long as the pressurizer 40 applies the pressure by moving relative to the fluid 30.

For example, the pressurizer 40 installed on the top side of the housing 10 may apply the pressure to the fluid 30 by moving downwards and release the pressure of the fluid 30 by moving upwards. The movement of the pressurizer 40 in the upward and downward directions may be performed by an operator or a robot arm.

The pressurizer 40 may apply, to the fluid 30, the amount of pressure that is equal to or larger than the increase in pressure of the fluid 30 detected by the pressure sensor 50 by moving in the inward direction of the battery module 10 (or the housing 10).

The pressurizer 40 may release or reduce the pressure applied to the fluid 30 by moving in the outward direction of the battery module 10 (or the housing 10).

When the pressurizer 40 applies the pressure to the fluid 30, the applied pressure may be transmitted to some of the plurality of secondary batteries 20 (e.g., the volume increase region T) through the fluid 30. When the applied pressure is transmitted to some of the plurality of secondary batteries 20 (e.g., the volume increase region T), additional gas generation may be suppressed.

According to the above description, it may be possible to effectively suppress swelling of some of the plurality of secondary batteries 20 by the application of pressure by the pressurizer 40. In other words, it may be possible to suppress the volume change of the plurality of secondary batteries 20. Accordingly, it may be possible to improve structural stability of the plurality of secondary batteries 20 or the battery module 1.

Specifically, when the pressurizer 40 applies the pressure to the fluid 30 in the housing 10, the pressure of the fluid 30 may be equal or similar to the internal pressure of the secondary batteries 20. In this case, the volume change of the secondary batteries 20 may be suppressed, and the overall structural stability of the secondary batteries 20 and the battery module 1 may improve.

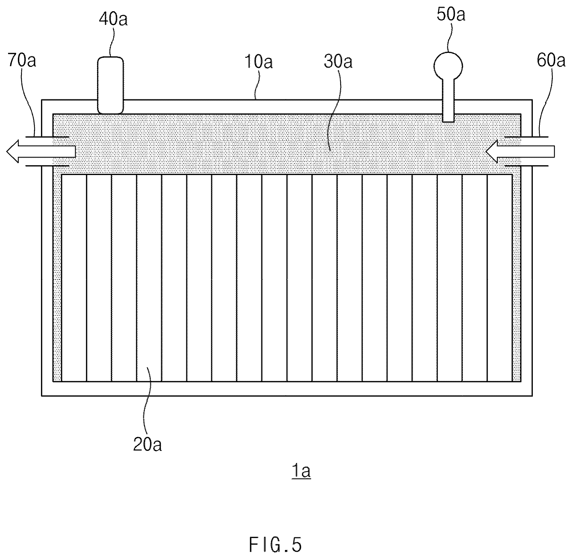

FIG. 5 shows a structure of a battery module according to another embodiment of the present disclosure. The description of the previous embodiment may be equally or similarly applied to this embodiment.

The battery module 1a may further include a fluid inlet 60a. The fluid inlet 60a may be disposed on one side of the housing 10a. The fluid 30a may enter the housing 10a through the fluid inlet 60a.

The battery module 1a may include a fluid outlet 70a. The fluid outlet 70a may be disposed on the other side of the housing 10a. The fluid 30a may exit the housing 10a through the fluid outlet 70a.

When the battery module 1a has the fluid inlet 60a and the fluid outlet 70a, the fluid 30a may circulate, and the plurality of secondary batteries 20a may be effectively cooled by the circulation of the fluid 30a.

Additionally, when the pressurization effect or cooling effect is not efficient due to degeneration of the fluid 30a, the fluid 30a in the battery module 1a may get replenished through the fluid inlet 60a and the fluid outlet 70a.

While the present disclosure has been hereinabove described with regard to a limited number of embodiments and drawings, the present disclosure is not limited thereto and may be embodied in different forms by those having ordinary skill in the technical field which the present disclosure pertains to within the technical aspect of the present disclosure and the scope of the appended claims and their equivalents.

### [LIST OF REFERENCE NUMERALS]

1, 1a: Battery module
10, 10a: Housing
20, 20a: A plurality of secondary batteries
30, 30a: Fluid
40, 40a: Pressurizer
50, 50a: Pressure sensor
60a: Fluid inlet
70a: Fluid outlet
T: Volume increase region

## Claims

1. A battery module, comprising:
a housing;
a plurality of secondary batteries housed in the housing;
a fluid contained in the housing so that the plurality of secondary batteries is submerged in the fluid; and
a pressurizer configured to apply pressure to the fluid.

2. The battery module according to claim 1, wherein the pressurizer is installed on the housing moveably relative to the fluid.

3. The battery module according to claim 1, wherein the fluid comprises an incompressible fluid.

4. The battery module according to claim 1, further comprising:
a pressure sensor to detect a pressure change of the fluid.

5. The battery module according to claim 4, wherein the pressure sensor is installed on the housing with an end coming into contact with the fluid to detect.

6. The battery module according to claim 4, wherein the pressurizer is configured to apply the pressure to the fluid based on a result of the detection of the pressure sensor.

7. The battery module according to claim 6, wherein the pressurizer is configured to apply, to the fluid, an amount of the pressure that is equal to or larger than an increase in the pressure of the fluid detected by the pressure sensor.

8. The battery module according to claim 1, wherein the fluid is a flame retardant fluid.

9. The battery module according to claim 1, wherein the fluid is a silicone oil.

10. The battery module according to claim 1, further comprising:
a fluid inlet on a side of the housing; and
a fluid outlet on an opposite side of the housing.

11. A method for controlling a battery module, comprising:
detecting a pressure of a fluid filled in a housing so that a plurality of secondary batteries housed in the housing is submerged in the fluid using a pressure sensor; and
applying pressure to the fluid using a pressurizer based on a result of the detection of the pressure sensor.

12. The method for controlling the battery module according to claim 11, wherein the applying of the pressure comprises detecting, by the pressure sensor, an increase in the pressure of the fluid.

13. The method for controlling the battery module according to claim 11, wherein the applying of the pressure comprises:
acquiring, by a controller, a value of the pressure detected using the pressure sensor; and
controlling the pressurizer to apply, to the fluid, to an amount of the pressure that is equal to or larger than the increase in the pressure of the fluid based on the value of the pressure acquired by the controller.
